# EUROPEAN PATENT APPLICATION

(11) **EP 2 736 110 A1**
(43) Date of publication of application: **28.05.2014**
(21) Application number: 12817254.1
(22) Date of filing: 11.07.2012
(51) Int. Cl.: H01M 8/02, H01M 4/86, H01M 8/12

(54) **SOLID-OXIDE FUEL CELL**

(30) Priority: 22.07.2011 JP 2011161314
(71) Applicant: Dai Nippon Printing Co., Ltd., Tokyo 162-8001 (JP)
(72) Inventor: Ohtani, Hitoshi, Tokyo 162-8001 (JP); Yoshikata, Kuniaki, Tokyo 162-8001 (JP); Kodani, Kazufumi, Tokyo 162-8001 (JP)
(74) Representative: Webster, Jeremy Mark
(86) International application number: PCT/JP2012/067712
(87) International publication number: WO 2013/015115

(57) **Abstract**

A configuration for preventing deformation of a solid oxide fuel cell is provided. A solid oxide fuel cell 1 includes a support substrate 2 formed from a gas-permeable metal, an anode 3 placed on the first surface of the support substrate 2, a back surface layer 7 placed on the second surface of the support substrate 2, an electrolyte 4 placed on the anode 3, and a cathode 6 placed on the electrolyte 4, and the anode and the back surface layer contain a metal and a ceramic.

## Description

### [Technical Field]

The present invention relates to a solid oxide fuel cell that generates electricity by the reaction between fuel gas and oxidant gas.

### [Background Art]

Fuel cells are cells that can directly convert chemical energy generated when fuel oxidizes into electrical energy, while continuously supplying fuel from outside and discharging the combustion product. Fuel cells are classified according to the electrolyte, and fuel cells in which an ion-conductive solid oxide is used as an electrolyte are called solid oxide fuel cells. As such a solid oxide fuel cell, the fuel cell disclosed in, for example, Patent Literature 1 is conventionally known.

The solid oxide fuel cell disclosed in Patent Literature 1 includes a metal substrate and cell elements (an anode, an electrolyte, and a cathode) placed on the metal substrate, and with such a configuration, the fuel cell can have an increased strength because the substrate is formed from metal.

When the fuel cell disclosed in Patent Literature 1 is produced, ceramics that are materials of the cell elements are placed on the metal substrate and sintered, and thereby a fuel cell in which the cell elements are placed on the metal substrate is produced. In some cases, the oxidized metal substrate is subjected to reduction treatment after sintering.

### [Citation List]

### [Patent Literature]

[PTL 1] JP 2004-512651A

### [Summary of Invention]

### [Technical Problem]

However, concerning fuel cells as described above, while the metal substrate thermally expands during the course of sintering the laminate of ceramics placed on the metal substrate, the ceramics contract due to sintering, possibly resulting in a warped fuel cell after sintering due to the difference between the changes in volume of the metal substrate and the ceramics, and the fuel cell breaks in some cases if warpage is large. Also, the metal substrate contracts during the course of reduction treatment on the oxidized metal substrate and, thereby, the fuel cell deforms in some cases.

The present invention has been conceived in view of the foregoing problem, and an object of the invention is to provide a solid oxide fuel cell that prevents deformation.

### [Solution to Problem]

The present invention is a solid oxide fuel cell for solving the foregoing problem, comprising a support substrate formed from a gas-permeable metal, an anode placed on a first surface of the support substrate, a back surface layer placed on a second surface of the support substrate, an electrolyte placed on the anode, and a cathode placed on the electrolyte, the anode and the back surface layer comprising a metal and a ceramic.

According to this configuration, the anode is placed on the first surface of the support substrate while the back surface layer that is similarly configured is placed on the second surface, and it is thus possible to make the change in volume on the front surface side and the change in volume on the back surface side of the support substrate during sintering uniform. Accordingly, the balance between the changes in volume of the support substrate can be maintained, and deformation of the solid oxide fuel cell can be prevented.

It is preferable that in the aforementioned solid oxide fuel cell, the ratio between the coefficient of thermal expansion of the back surface layer and the coefficient of thermal expansion of the support substrate is 20% or less.

It is preferable that the ratio between the coefficient of thermal expansion of the back surface layer and the coefficient of thermal expansion of the anode is 20% or less.

It is preferable that the support substrate has a thickness greater than that of the back surface layer.

It is preferable that the anode and the back surface layer comprise the same ceramic.

It is preferable that the anode and the back surface layer are formed from the same material.

It is preferable that the support substrate comprises a metal oxide.

### [Advantageous Effects of Invention]

According to the present invention, deformation of a solid oxide fuel cell can be prevented.

### [Brief Description of Drawings]

[FIG. 1] FIG. 1 includes (a) a cross-sectional view and (b) a plan view of a solid oxide fuel cell according to one embodiment of the present invention.
[FIG. 2] FIG. 2 is a cross-sectional view of a solid oxide fuel cell according to another embodiment.
[FIG. 3] FIG. 3 is an explanatory diagram of a method for producing a solid oxide fuel cell.
[FIG. 4] FIG. 4 is a cross-sectional view of a solid oxide fuel cell according to yet another embodiment.

### [Reference Signs List]

1 Solid oxide fuel cell
2 Support substrate
3 Anode
4 Electrolyte
5 Intermediate layer
6 Cathode
7 Back surface layer
10 Through-hole

### [Description of Embodiments]

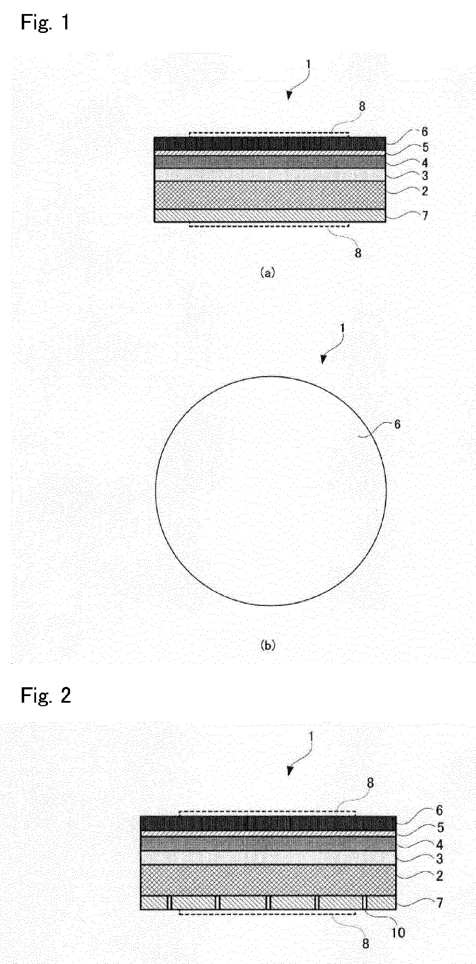

Embodiments of the present invention will now be described below with reference to the attached drawings. FIG. 1 includes (a) a cross-sectional view and (b) a plan view of a solid oxide fuel cell according to one embodiment of the present invention. As shown in FIG. 1, this solid oxide fuel cell 1 (referred to as a "fuel cell 1" below) is formed in a circular shape as viewed from above and includes a flat-plate support substrate 2 made of metal, a thin-film anode 3 placed on the first surface (front surface) of the support substrate 2, and a thin-film back surface layer 7 placed on the second surface (back surface) of the support substrate 2 so as to be on the side opposite the anode 3, and the support substrate 2 is sandwiched between the anode 3 and the back surface layer 7. Also, the fuel cell 1 includes a thin-film electrolyte 4 placed on the first surface (front surface) of the anode 3, a thin-film intermediate layer 5 placed on the first surface (front surface) of the electrolyte 4, and a thin-film cathode 6 placed on the first surface (front surface) of the intermediate layer 5. A current collector 8 for collecting an electric current can be placed on the front surface (upper surface) of the cathode 6 and the back surface (lower surface) of the back surface layer 7.

The support substrate 2 is formed from a porous metal and has gas permeability and electrical conductivity The thickness of the support substrate 2 is not particularly limited, and is preferably 100 to 3000 µm and preferably greater than the thickness of the back surface layer 7. The coefficient of thermal expansion of the support substrate 2 is not particularly limited, and is preferably 10.0 to 20.0 (1/K).

The anode 3 is formed from a porous material containing a metal and a ceramic, and the thickness thereof is not particularly limited, and is preferably 5 to 100 µm. The coefficient of thermal expansion of the anode 3 is not particularly limited, and is preferably 10.0 to 20.0 (1/K).

The back surface layer 7 is formed from a porous material containing a metal and a ceramic and has gas permeability and electrical conductivity The thickness of the back surface layer 7 is not particularly limited, and is preferably 5 to 100 µm. The coefficient of thermal expansion of the back surface layer 7 is not particularly limited, and is preferably 10.0 to 20.0 (1/K). The ratio between the coefficient of thermal expansion of the back surface layer 7 and the coefficient of thermal expansion of the support substrate 2 (the coefficient of thermal expansion of the back surface layer 7 / the coefficient of thermal expansion of the support substrate 2 × 100) is preferably 20% or less, and the ratio between the coefficient of thermal expansion of the back surface layer 7 and the coefficient of thermal expansion of the anode 3 (the coefficient of thermal expansion of the back surface layer 7 / the coefficient of thermal expansion of the anode 3 × 100) is preferably 20% or less. The coefficient of thermal expansion is obtained from the result of measuring linear thermal expansion in an air atmosphere from room temperature to 1050°C. For obtaining the coefficient of thermal expansion, displacement between room temperature and 1000°C is generally used. The coefficient of thermal expansion is calculated through measurement of linear thermal expansion with, for example, a thermal expansion meter DIL (dilatometer) of Bruker AX using a dense sintered body sample.

The thicknesses of the electrolyte 4 and the cathode 6 are each preferably 5 to 100 µm, and the thickness of the intermediate layer 5 is preferably 5 to 100 µm.

Next, materials of the above-described components of the fuel cell 1 will now be described.

As a material of the support substrate 2, metals such as Fe, Ti, Cr, Cu, Ni, and Ag are usable. Oxides of the aforementioned metals, such as NiO, are also usable. Moreover, one of these materials may be used singly, and two or more may be used as an alloy As an alloy, for example, stainless steel heat resisting materials and the like are usable, and specifically, austenitic stainless steel, ferritic stainless steel, nickel alloys such as inconel and hastelloy, and the like are usable. It is preferable from the gas permeability and gas diffusibility viewpoint that the support substrate 2 has a porosity of 30 to 60%.

As a material of the anode 3, known metal- and ceramic-containing materials are usable. For example, a mixture of a metal catalyst and a powdery ceramic material composed of an oxide ion conductor is usable. As a metal catalyst used at this time, materials that are stable in a reducing atmosphere and have hydrogen oxidizing activity are usable, such as nickel, iron, cobalt, and noble metals (e.g, platinum, ruthenium, and palladium). As an oxide ion conductor, those that have a fluorite structure or a perovskite structure are preferably usable. Examples of conductors having a fluorite structure include ceria oxides doped with, for example, samarium or gadolinium, zirconia oxides containing scandium or yttrium, and the like. Examples of conductors having a perovskite structure include lanthanum gallate oxides doped with strontium or magnesium. It is preferable to form the anode from, among the aforementioned materials, a mixture of an oxide ion conductor and nickel. The form of mixing between the ceramic material composed of an oxide ion conductor and nickel may be a physically mixed form, and may be a form in which nickel is modified with ceramic powder. One of the above-described ceramic materials may be used singly, or two or more may be used as a mixture.

As a material of the back surface layer 7, known metal- and ceramic-containing materials are usable. As a metal used at this time, materials that are stable in a reducing atmosphere and have hydrogen oxidizing activity are usable, such as nickel, iron, copper, gold, silver, cobalt, and noble metals (e.g, platinum, ruthenium, and palladium). As a ceramic, materials that have oxygen ion conductivity and in which a metal oxide such as zirconium oxide, cerium oxide, or lanthanum oxide serves as a main component are usable. The ceramic content in the back surface layer 7 is preferably 20 to 80 wt% based on the total weight of the back surface layer7.

As this material of the back surface layer 7, the same materials as the anode 3 described above are usable. At this time, the material formulation can be suitably changed, and thus completely the same material as the anode 3 may be used, and a material with a different formulation can be used as well. For example, it is possible that the same ceramic is contained in the anode 3 and the back surface layer 7 while different metals are used therein.

As a material of the electrolyte 4, those that are known as electrolytes for solid oxide fuel cells are usable. For example, oxygen ion conductive ceramic materials are usable, such as ceria oxides doped with, for example, samarium or gadolinium (GDC), lanthanum gallate oxides doped with strontium or magnesium, and zirconia oxides containing scandium or yttrium (YSZ).

As a material of the intermediate layer 5, those that are unlikely to react with the components of the cathode 6 and have a high level of oxygen ion conductivity are usable. For example, ceria oxides doped with, for example, samarium or gadolinium are usable as such materials.

As a material of the cathode 6, those that are known as cathode materials for solid oxide fuel cells are usable. For example, metal oxides that have, for example, a perovskite structure and is composed of, for example, Co, Fe, Ni, Cr, or Mn are usable. Specific examples include oxides such as (Sm,Sr)CoO₃, (La,Sr)MnO₃, (La,Sr)CoO₃, (La,Sr)(Fe,Co)O₃, and (La,Sr)(Fe,Co,Ni)O₃, with (La,Sr)(Fe,Co)O₃ being preferable. One of the above-described materials may be used singly, or two or more may be used as a mixture.

As a material of the current collector 8, conductive metals such as Pt, Au, Ag, Ni, Cu, and SUS, or conductive ceramics such as La(Cr,Mg)O₃, (La,Ca)CrO₃, and (La,Sr)CrO₃ are usable, and one of these may be used singly, or two or more may be used as a mixture.

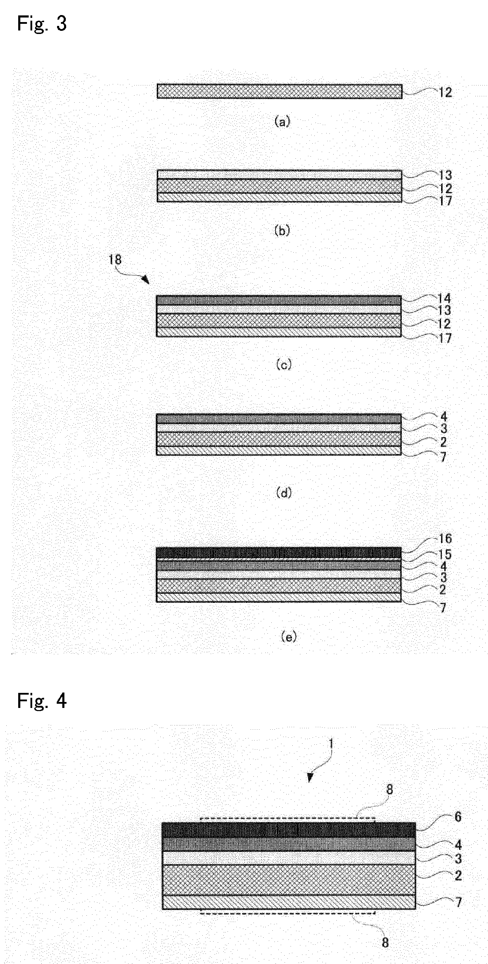

Next, a method for producing a solid oxide fuel cell will now be described. FIG. 3 is an explanatory diagram for the method for producing a solid oxide fuel cell.

As shown in FIG. 3, the aforementioned fuel cell 1 can be produced using a substrate green sheet 12, an anode green sheet 13, a back surface layer green sheet 17, an electrolyte green sheet 14, an intermediate layer paste 15, and a cathode paste 16. Each of these green sheets is a known green sheet for production of solid oxide fuel cells, and refers to a sheet in a state attained by mixing, for example, a raw-material powder, a binder, a dispersant, a plasticizer, and a solvent to prepare a slurry, spreading the slurry into a thin-film form, and removing the solvent.

Here, one example of a method for producing each of the aforementioned green sheets will now be described. For example, when production is carried out using a doctor blade method, the substrate green sheet 12, the anode green sheet 13, and the back surface layer green sheet 17 can be prepared in the following manner. First, a pore-forming agent is added to a powder of the above-described material of the support substrate 2, the anode 3, or the back surface layer 7, and a binder, a dispersant, and a plasticizer are added to prepare a slurry in which ingredients are dispersed in a dispersion medium composed of an alcoholic solvent such as ethanol or 2-propanol. The amount of the pore-forming agent added is preferably 5 to 20 wt%. The pore-forming agent added combusts and evaporates during sintering, and therefore pores are formed in places where the pore-forming agent was present. Examples of the pore-forming agent include carbon powders and resin powders, but other materials may be used as well if they can evaporate and form pores during sintering.

Also, the type of binder used when preparing the aforementioned slurry composition or a kneaded composition is not limited, and known organic or inorganic binders are usable. Examples of organic binders include ethylene copolymers, styrene copolymers, acrylate and methacrylate copolymers, vinyl acetate copolymers, maleic acid copolymers, vinyl acetal resins, vinyl formal resins, polyvinyl butyral resins, vinyl alcohol resins, celluloses such as ethylcellulose, waxes, and the like.

Next, the prepared slurry is shaped by a known doctor blade method to form a layer of the slurry on a film of, for example, polyethylene terephthalate. This slurry layer is dried by removing the dispersion medium therefrom to form the substrate green sheet 12, the anode green sheet 13, or the back surface layer green sheet 17. The dispersion medium is not limited to an alcoholic solvent, and other organic solvents such as toluene, xylene, and ketone-based solvents may be used. Also, the slurry is not limited to a slurry derived from an organic solvent, and a slurry in which the aforementioned mixed powder is dispersed in water may be used. For example, use of a specific dispersant makes it possible to attain a state in which the aforementioned mixed powder is dispersed in water.

The electrolyte green sheet 14 is prepared by the following method. A binder, a dispersant, and a plasticizer are added to a powder of the above-described material of the electrolyte 4 to prepare a slurry in which ingredients are dispersed in a dispersion medium composed of an organic solvent. The prepared slurry is applied by a doctor blade method to form a slurry layer on a film of, for example, polyethylene terephthalate in the same manner as, for example, the anode. This slurry layer is dried by removing the dispersion medium therefrom to attain a state in which the electrolyte green sheet 14 is formed.

The intermediate layer paste 15 and the cathode paste 16 are known pastes for production of solid oxide fuel cells, and can be prepared by kneading a binder, an organic solvent, and the like with a raw-material powder of the above-described material of the intermediate layer 5 or the cathode 6.

Next, a method for producing the fuel cell 1 will now be described.

When producing the fuel cell 1, first, as shown in FIGS. 3(a) and (b), the substrate green sheet 12 is provided, the anode green sheet 13 is stacked on the first surface (front surface) of the substrate green sheet 12, and also the back surface layer green sheet 17 is attached to the second surface (back surface). As shown in FIG. 3(c), the electrolyte green sheet 14 is stacked on the first surface (front surface) of the anode green sheet 13. Thereby, a green sheet laminate 18 in which the green sheets 12, 13, 14, and 17 are stacked is formed.

Next, the green sheet laminate 18 in which the green sheets 12, 13, 14, and 17 are stacked is co-sintered. The sintering temperature at this time is preferably 1100°C to 1500°C. Due to sintering, the substrate green sheet 12, the anode green sheet 13, the back surface layer green sheet 17, and the electrolyte green sheet 14 become the support substrate 2, the anode 3, the back surface layer 7, and the electrolyte 4, respectively, as shown in FIG. 3(d). At this time, if the support substrate 2 is prepared from a metal material such as ferritic stainless steel or Ni, it is preferable to perform sintering under an inert atmosphere such as N₂ or Ar gas or under a reducing atmosphere in order to prevent oxidization. On the other hand, if the support substrate 2 is prepared from a metal oxide material such as NiO, sintering can be performed under an oxidizing atmosphere. The support substrate 2 may be subjected to reduction treatment after sintering.

Then, as shown in FIG. 3(e), the intermediate layer paste 15 is applied to the first surface (front surface) of the electrolyte 4 formed by sintering, and the cathode paste 16 is applied thereto. Application of the intermediate layer paste 15 and the cathode paste 16 can be performed by, for example, a known screen printing method, doctor blade method, spray coating method, sputtering method, or the like.

Thereafter, sintering the intermediate layer paste 15 and the cathode paste 16 forms the intermediate layer 5 and the cathode 6, and the fuel cell 1 shown in FIG. 1 is thus produced. The sintering temperature at this time is preferably 1100°C to 1500°C. Sintering is preferably carried out under an inert atmosphere such as N₂ or Ar gas or under a reducing atmosphere, but it is also possible to perform sintering under an oxidizing atmosphere at temperatures at which oxidization of the support substrate 2 can be prevented. The support substrate 2 may be subjected to reduction treatment after sintering.

According to the fuel cell 1 described above, the anode 3 is placed on the first surface of the support substrate 2 while the back surface layer 7 that is similarly configured is placed on the second surface, and it is thus possible to make the change in volume on the front surface side and the change in volume on the back surface side of the support substrate 2 during sintering uniform. Accordingly, the balance between the changes in volume of the support substrate 2 can be maintained, and deformation of the fuel cell 1 can be prevented.

Configuring the ratio between the coefficient of thermal expansion of the back surface layer 7 and the coefficient of thermal expansion of the support substrate 2 to be 20% or less makes it possible to reduce the difference between the change in volume of the back surface layer 7 and the change in volume of the support substrate 2, which is therefore further effective for preventing the fuel cell 1 from deforming. Moreover, when the ratio between the coefficient of thermal expansion of the back surface layer 7 and the coefficient of thermal expansion of the anode 3 is 20% or less, the balance between the changes in volume on the front surface side and the back surface side of the support substrate 2 can be more uniform.

Configuring the support substrate 2 to be thicker than the back surface layer 7 is effective for preventing the support substrate 2 from deforming.

When the anode 3 and the back surface layer 7 contain the same ceramic or when they are formed from the same material, the balance is further improved, which is further effective for preventing the fuel cell 1 from deforming.

A metal oxide such as NiO contained in the support substrate 2 causes volume shrinkage when the support substrate 2 is reduction-treated and, therefore, in order to allow, at this time, the support substrate 2 to undergo volume shrinkage in a balanced manner on the front side and the back side, the above-described configuration is especially effective.

One embodiment of the present invention has been described above, but the specific aspect of the present invention is not limited to the above embodiment.

For example, in the above embodiment, the thickness of the support substrate 2 is greater than the thickness of the back surface layer 7, but the present invention is not limited to this configuration, and the thickness of each component can be suitably changed, and the support substrate 2 can be as thick as or thinner than the back surface layer 7. Also, a plurality of through-holes that penetrate in the thickness direction may be formed in the support substrate 2.

FIG. 2 is a cross-sectional view of a solid oxide fuel cell according to another embodiment. As shown in FIG. 2, the fuel cell may be configured such that a plurality of through-holes 10 that penetrate in the thickness direction are formed in the back surface layer 7. Also, it is possible to remove the back surface layer 7 by, for example, shaving it. For example, it is possible that the back surface layer 7 is partially removed to thereby expose part of the back surface of the support substrate 2 to the outside, and that the current collector 8 is placed on the exposed portion.

Although the intermediate layer 5 is placed between the electrolyte 4 and the cathode 6 in the above embodiment, the intermediate layer 5 can be omitted as shown in FIG. 4.

### Examples

The present invention will now be described below in more detail by way of examples and a comparative example. However, the present invention is not limited to the examples.

### (Example 1)

### (Substrate green sheet)

A fuel cell 1 as shown in FIG. 1 was prepared as Example 1. For a support substrate 2, a pore-forming agent composed of carbon powder was added to a mixture (Fe₂O₃ : NiO =1 : 9) of Fe₂O₃ (particle diameter range: 0.1 to 3 µm, average particle diameter: 1 µm) and NiO (particle diameter range: 0.1 to 3 µm, average particle diameter: 1 µm) in an amount of 10 wt% based on the total amount, polyvinyl butyral as a binder resin and dibutyl phthalate as a plasticizer were added, and a slurry formed by dispersion in a 2-propanol organic solvent was prepared. This slurry was applied to a PET film by a doctor blade method and dried at 110°C to remove the dispersion solvent. Thereby, a substrate green sheet 12 having a thickness of 1000 µm was prepared.

### (Anode green sheet)

Then, an anode green sheet 13 was prepared by the following method. A pore-forming agent composed of carbon powder was added to the materials of an anode 3, i.e., NiO (particle diameter range: 0.1 to 3 µm, average particle diameter: 1 µm) and yttria stabilized zirconia (YSZ) as an oxygen ion conductive material in an amount of 10 wt% based on the total amount, polyvinyl butyral as a binder resin and dibutyl phthalate as a plasticizer were added, and a slurry formed by dispersion in a 2-propanol organic solvent was prepared. This slurry was applied to a PET film by a doctor blade method and dried at 110°C to remove the dispersion solvent. Thereby, an anode green sheet 13 having a thickness of 80 µm was formed.

### (Electrolyte green sheet)

Then, an electrolyte green sheet 14 was prepared by the following method. Polyvinyl butyral as a binder resin and dibutyl phthalate as a plasticizer were added to yttria stabilized zirconia (YSZ) as a material of an electrolyte 4, and a slurry formed by dispersion in a 2-propanol organic solvent was prepared. This slurry was applied to a PET film by a doctor blade method and dried at 110°C to remove the dispersion solvent. Thereby, an electrolyte green sheet 14 having a thickness of 10 µm was formed.

### (Back surface layer green sheet)

The same green sheet as the above-described anode green sheet 13 was prepared as a back surface layer green sheet 17.

### (Green sheet laminate)

Then, the above-described substrate green sheet 12, anode green sheet 13, and electrolyte green sheet 14 were stacked in this order on the back surface layer green sheet 17 to provide a green sheet laminate 18. The laminate was pressed under 2 kN/m² and 70°C conditions by a thermal press and heated at 1500°C for 10 hours for sintering to prepare a half cell. The thickness of the half cell at this time was 1150 µm.

### (Intermediate layer paste)

Next, an intermediate layer paste was prepared by the following method. Ceria oxide doped with gadolinium (GDC (particle diameter range: 0.1 to 3 µm, average particle diameter: 1 um)) was used as a material, further, ethylcellulose as a binder resin and ethylcarbitol as a solvent were added, and then the mixture was kneaded to prepare a paste. Using this paste, a pattern was formed on the electrolyte 4 of the above-described half cell by screen printing, dried at 130°C, and then heated at 1300°C for 1 hour for sintering to form an intermediate layer 5 having a thickness of about 3 µm.

### (Cathode paste)

Next, a cathode paste 16 was prepared by the following method. La_{0.6}Sr_{0.4}Co_{0.2}Fe_{0.8}O₃ (diameter range: 0.1 to 3 µm, average particle diameter: 1 µm) was used as a material, further, ethylcellulose as a binder resin and ethylcarbitol as a solvent were added, and then the mixture was kneaded to prepare a paste. Using this paste, a pattern was formed on the intermediate layer 5 of the above-described half cell by screen printing, dried at 130°C, and then heated at 1200°C for 1 hour for sintering to form a cathode 6 having a thickness of about 20 µm. In this way, a solid oxide fuel cell 1 was obtained.

### (Example 2)

### (Substrate green sheet)

As Example 2, a fuel cell 1 as shown in FIG. 4 was prepared. For a support substrate 2, a pore-forming agent composed of carbon powder was added to a mixture (Fe₂O₃ : NiO =1 : 9) of Fe₂O₃ (diameter range: 0.1 to 3 µm, average particle diameter: 1 µm) and NiO (diameter range: 0.1 to 3 µm, average particle diameter: 1 µm) in an amount of 10 wt% based on the total amount, polyvinyl butyral as a binder resin and dibutyl phthalate as a plasticizer were added, and a slurry formed by dispersion in a 2-propanol organic solvent was prepared. This slurry was applied to a PET film by a doctor blade method and dried at 110°C to remove the dispersion solvent. Thereby, a substrate green sheet 12 having a thickness of 1000 µm was prepared.

### (Anode green sheet)

Then, an anode green sheet 13 was prepared by the following method. A pore-forming agent composed of carbon powder was added to the materials of the anode 3, i.e., NiO (particle diameter range: 0.1 to 3 µm, average particle diameter: 1 µm) and ceria oxide doped with gadolinium (GDC (particle diameter range: 0.1 to 3 µm, average particle diameter: 1 µm)) as an oxygen ion conductive material in an amount of 10 wt% based on the total amount, polyvinyl butyral as a binder resin and dibutyl phthalate as a plasticizer were added, and a slurry formed by dispersion in a 2-propanol organic solvent was prepared. This slurry was applied to a PET film by a doctor blade method and dried at 110°C to remove the dispersion solvent. Thereby, an anode green sheet 13 having a thickness of 80 µm was formed.

### (Electrolyte green sheet)

Then, an electrolyte green sheet 14 was prepared by the following method. Polyvinyl butyral as a binder resin and dibutyl phthalate as a plasticizer were added to ceria oxide doped with gadolinium (GDC (particle diameter range: 0.1 to 3 µm, average particle diameter: 1 µm)) as a material of an electrolyte 4, and a slurry formed by dispersion in a 2-propanol organic solvent was prepared. This slurry was applied to a PET film by a doctor blade method and dried at 110°C to remove the dispersion solvent. Thereby, an electrolyte green sheet 14 having a thickness of 10 µm was formed.

### (Back surface layer green sheet)

The same green sheet as the above-described anode green sheet 13 was prepared as a back surface layer green sheet 17.

### (Green sheet laminate)

Then, the above-described substrate green sheet 12, anode green sheet 13, and electrolyte green sheet 14 were stacked in this order on the back surface layer green sheet 17 to provide a green sheet laminate. The laminate was pressed under 2 kN/m² and 70°C conditions by a thermal press and heated at 1500°C for 10 hours for sintering to prepare a half cell. The thickness of the half cell at this time was 1150 µm.

### (Cathode paste)

Next, a cathode paste 16 was prepared by the following method. La_{0.6}Sr_{0.4}Co_{0.2}Fe_{0.8}O₃ (particle diameter range: 0.1 to 3 µm, average particle diameter: 1 µm) was used as a material, further, ethylcellulose as a binder resin and ethylcarbitol as a solvent were added, and then the mixture was kneaded to prepare a paste. Using this paste, a pattern was formed on the electrolyte 4 of the above-described half cell by screen printing, dried at 130°C, and then heated at 1200°C for 1 hour for sintering to form a cathode 6 having a thickness of about 20 µm. In this way, a solid oxide fuel cell 1 was obtained.

### (Comparative Example)

As a comparative example, a fuel cell 1 as shown in FIG. 1 was prepared without a back surface layer 7 and an intermediate layer 5. At this time, the fuel cell was prepared by the same method as in Example 1 except that the back surface layer green sheet was not used.

As a result, visual inspection of the appearance of the prepared fuel cells 1 revealed that, in the comparative example, the support substrate 2 was curved in a convex shape, and constituting layers that were placed above the support substrate 2 and that were not able to follow the shape change developed cracks, whereas no deformation was observed in the fuel cells of Examples 1 and 2.

## Claims

1. A solid oxide fuel cell comprising:
a support substrate formed from a gas-permeable metal,
an anode placed on a first surface of the support substrate,
a back surface layer placed on a second surface of the support substrate,
an electrolyte placed on the anode, and
a cathode placed on the electrolyte,
the anode and the back surface layer comprising a metal and a ceramic.

2. The solid oxide fuel cell according to claim 1, wherein a ratio between coefficient of thermal expansion of the back surface layer and coefficient of thermal expansion of the support substrate is 20% or less.

3. The solid oxide fuel cell according to claim 1 or 2, wherein a ratio between coefficient of thermal expansion of the back surface layer and coefficient of thermal expansion of the anode is 20% or less.

4. The solid oxide fuel cell according to any one of claims 1 to 3, wherein the support substrate has a thickness greater than that of the back surface layer.

5. The solid oxide fuel cell according to any one of claims 1 to 4, wherein the anode and the back surface layer comprise the same ceramic.

6. The solid oxide fuel cell according to any one of claims 1 to 5, wherein the anode and the back surface layer are formed from the same material.

7. The solid oxide fuel cell according to any one of claims 1 to 6, wherein the support substrate comprises a metal oxide.
